# FASCICULE DE BREVET EUROPEEN

(11) **EP 0 846 492 B1**
(45) Date de publication et mention de la délivrance du brevet: **24.09.2003**
(21) Numéro de dépôt: 97402874.8
(22) Date de dépôt: 28.11.1997
(51) Int. Cl.: B01J 8/10, B01D 53/86

(54) **Procédé d'épuration catalytique d'effluents gazeux**
Verfahren zur katalytischen Reinigung von Abgasen
Process for the catalytic purification of exhaust gases

(30) Priorité: 05.12.1996 FR 9615072
(43) Date de publication de la demande: 10.06.1998
(73) Titulaire: Institut Français du Pétrole, 92852 Rueil-Malmaison Cedex (FR); Bourcier, Jacques, 44600 Saint-Nazaire (FR)
(72) Inventeur: Morlec, Jean, 44600 Saint-Nazaire (FR); Bourcier, Jacques, 44600 Saint-Nazaire (FR)

(56) Documents cités:
- EP-A- 0 037 119
- EP-A- 0 194 430
- WO-A-96/16729
- WO-A-96/20039
- FR-A- 2 246 724

## Description

L'invention concerne un dispositif rotatif perfectionné d'épuration catalytique d'effluents gazeux.

L'invention trouve des applications notamment dans les systèmes d'échange de chaleur ou adaptés à purifier de l'air chargé de substances telles que des composés organiques volatils (C.O.V), qui peuvent être oxydées et éliminées par incinération thermique ou catalytique.

Par le brevet FR-A- 2.720.488, on connaît un dispositif d'échange thermique et d'épuration par effet thermique et/ou catalytique de gaz pollués tels que des C.O.V. Il comporte une enveloppe ou cage, un conduit d'introduction des effluents pollués dans la cage, un autre pour l'évacuation des effluents traités hors de la cage, une couronne contenant une charge inerte de matériaux solides particulaires présentant une grande surface d'échange thermique (silice, granit ou matériaux plus légers tels que structures alvéolaires métalliques ou autres, ou encore nodules cryogéniques pour les températures négatives, etc) qui est disposée à l'intérieur de la cage. La couronne peut être divisée en plusieurs parties par un cloisonnement intérieur ou bien selon les cas, servir de support à un certain nombre de paniers. Des moyens moteurs sont utilisés pour animer la couronne et la cage d'un mouvement de rotation l'une relativement à l'autre autour d'un axe vertical (soit que la couronne tourne, la cage étant fixe, soit que la couronne au contraire est fixe et la cage tourne autour d'elle). Dans un premier secteur angulaire de la couronne, s'effectue un premier transfert de chaleur entre les effluents et la charge inerte. Par un deuxième secteur de la couronne, un deuxième transfert de chaleur s'effectue entre des effluents et la charge dans la couronne. Un réacteur thermique pourvu éventuellement d'un lit catalytique, est disposé dans cette partie centrale pour brûler les substances polluantes dans les effluents canalisés par la première zone angulaire.

Par le brevet FR-A-2.728.483, on connaît un dispositif d'épuration catalytique d'effluents pollués par des COV comportant, à l'intérieur d'une cage fixe, une couronne tournante d'axe vertical comprenant un lit catalytique annulaire tapissant sa paroi intérieure et une charge annulaire extérieure au lit catalytique, d'un matériau présentant une grande surface d'échange thermique. Les effluents traversent deux fois le lit catalytique de part et d'autre de la zone centrale. Un brûleur est disposé au-dessus de la zone centrale de réaction et il est raccordé par l'intermédiaire d'un joint tournant, avec un conduit d'injection de carburant. Il est utilisé pour chauffer les effluents entrants, de façon à atteindre un point de fonctionnement autothermique, ou éventuellement pour faire un appoint thermique dans le cas où la teneur en composés polluants COV est insuffisante pour l'obtenir.

Par le brevet EP-A-0 194 430, il est connu de réguler la température d'un réacteur catalytique par injection contrôlée d'une substance réactive et d'un gaz réfrigérant.

Par la demande de brevet FR-A-2 246 724, il est également connu d'utiliser des moyens de chauffage électrique pour chauffer un régénérateur catalytique disposé dans le circuit d'échappement de machines à combustion interne.

Par la demande de brevet EP-A-0 037 119, il est également connu d'utiliser des moyens de chauffage électrique pour chauffer un dispositif d'épuration à réacteur catalytique.

Le procédé selon l'invention permet l'épuration en continu par combustion catalytique, d'effluents gazeux chargés de substances polluantes telles que des composés organo-volatils (COV), dans un dispositif comportant une cage, une couronne d'axe vertical disposée à l'intérieur de la cage et contenant au moins une charge thermique de matériaux présentant une grande surface d'échange thermique, des moyens moteurs pour animer la couronne d'un mouvement de rotation relativement à la cage, un réacteur à lit catalytique disposé dans la partie centrale du dispositif pour purifier les effluents, au moins un conduit pour l'introduction d'effluents dans la cage et au moins un conduit pour l'évacuation d'effluents hors de la cage, des moyens de chauffage électrique et des moyens d'injection contrôlée d'un combustible et/ou d'au moins un fluide ininflammable de refroidissement, susceptible(s) de réguler la température de combustion. Le procédé comporte successivement :
- une phase préalable de chauffage du réacteur à lit catalytique le temps nécessaire à porter le lit catalytique à une température suffisante propre à l'amorçage d'une réaction d'oxydation catalytique des substances polluantes, par connexion temporaire d'éléments de chauffage électrique noyés dans le lit catalytique à un appareil d'alimentation électrique extérieur au dispositif alors que la couronne est immobile relativement à la cage, et, après déconnexion des moyens de chauffage de l'appareil d'alimentation électrique extérieur;
- une phase de fonctionnement avec une mise en rotation de la couronne relativement à la cage en activant les moyens moteurs et établissement d'une circulation permanente d'effluents à épurer au travers de la couronne, et une régulation thermique de la réaction autotherme en utilisant les dits moyens d'injection.

Le procédé présente de nombreux avantages. L'utilisation d'éléments de chauffage en contact intime avec le catalyseur, et que l'on connecte temporairement à un appareil d'alimentation électrique extérieur avant le début des opérations d'épuration proprement dites, simplifie grandement la réalisation et l'utilisation du dispositif de mise en oeuvre.
a) Le préchauffage du catalyseur est comparativement beaucoup plus rapide, qu'avec les moyens de chauffage indirects à circulation d'air chaud utilisés précédemment où le réacteur est porté à haute température de fonctionnement par une circulation d'air réchauffé au moyen d'un brûleur auxiliaire. Non seulement parce que le chauffage est plus efficace en raison du contact étroit entre les éléments chauffants et le catalyseur, mais également parce que la séquence de préchauffage est beaucoup plus courte. Les réglementations en vigueur imposent en effet de respecter des séquences de sécurité codifiées pour l'alimentation et l'allumage des brûleurs industriels qui allongent les opérations de mise en oeuvre.

L'étape préalable de chauffage peut être effectuée hors des périodes de fonctionnement normal du dispositif, la nuit ou les week-ends, et à moindre coût en profitant des tarifs d'heures « creuses ». La connexion avec le réseau électrique est simplifiée puisqu'elle n'est établie que lorsque la couronne est immobilisée. Les moyens de régulation de la température de fonctionnement étant des circuits d'injection de fluides (carburant et eau pulvérisée par exemple) associés au conduit d'amenée des effluents, sont faciles à installer. L'agencement du dispositif est favorable à une diminution des coûts de fabrication et d'entretien et une simplification des moyens de sécurité à mettre en oeuvre.

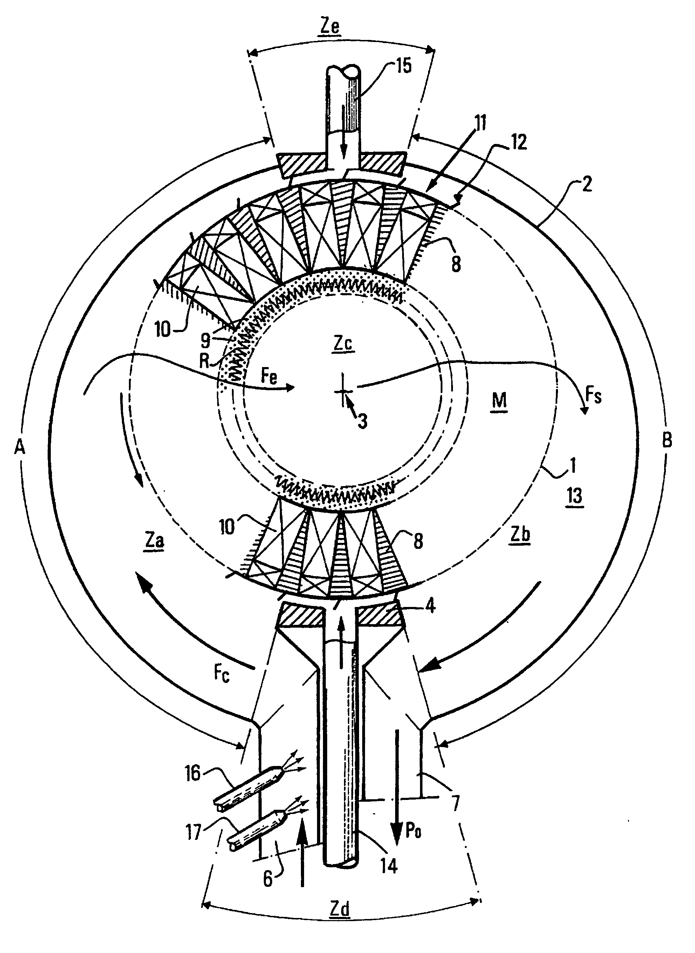

D'autres caractéristiques et avantages du dispositif perfectionné selon l'invention, apparaîtront à la lecture de la description ci-après d'exemples non limitatifs de réalisation, en se référant à la Fig.1 qui montre schématiquement en coupe un mode de réalisation du dispositif.

Le dispositif 1 comporte (Fig.1) une couronne 1 à axe vertical disposée à l'intérieur d'une enveloppe ou cage extérieure métallique 2, de forme cylindrique par exemple. Le diamètre de la cage ou enveloppe 2 est supérieur à celui de la couronne 1. Celle-ci est par exemple décentrée par rapport à la cage 2. De part et d'autre du plan diamétral contenant l'axe vertical 3 de la couronne, et suivant un secteur angulaire limité, la cage 2 comporte une portion de paroi latérale 4 sensiblement tangente à la paroi latérale de la couronne 5. L'espace intérieur de la cage autour de la couronne 1 de part et d'autre de la portion de paroi 4 comporte ainsi deux zones arrondies de section variable Za et Zb. Elles communiquent respectivement avec un conduit 6 d'amenée des effluents gazeux à épurer, et un conduit 7 d'évacuation de ces mêmes effluents après épuration.

La couronne 1 est pourvue d'un cloisonnement intérieur constitué de plaques radiales ou secteurs angulaires 8 régulièrement répartis. Un premier secteur angulaire A délimité par une ou plusieurs de ces plaques radiales 8, canalise les effluents à épurer introduits dans la zone convergente Za vers la zone centrale de la couronne (flux Fe). Un deuxième secteur angulaire B fait communiquer la zone centrale 8 de la couronne avec la zone divergente Zb et avec le conduit d'évacuation 7 (flux Fs).

La paroi intérieure de la couronne est tapissée tout autour d'un lit catalytique. annulaire 9 constitué d'un lit de particules, ou éventuellement d'un catalyseur en nid d'abeille. Les effluents doivent traverser le lit catalytique une première fois pour gagner la zone centrale réactive et une deuxième fois pour la quitter et traverser la zone angulaire opposée avant leur évacuation vers l'extérieur.

Des moyens de chauffage sont utilisés pour chauffer le lit catalytique 9. On utilise par exemple des résistances électriques R (Fig.2) disposées au sein du lit catalytique, sur tout le pourtour intérieur de la couronne 1, reliées à des moyens de connexion électrique (non représentés) que l'on peut raccorder au réseau électrique soit manuellement soit grâce à un robot de branchement d'un type connu.

Dans la partie de la couronne 1 restante, extérieurement à ce lit catalytique 9 et entre les plaques de cloisonnement 8, est répartie une masse inerte M constituée d'un matériau à grande surface d'échange thermique. Il peut s'agir de billes en céramique ou métalliques, de tournures ou copeaux d'usinage, de garnissage en vrac ou structuré, d'une structure alvéolaire à alvéoles régulières ou irrégulières telle qu'une structure en nids d'abeille, de matelas métalliques ou céramiques tricotés tissés ou aiguilletés etc. On peut utiliser par exemple une structure alvéolaire telle que décrite dans le brevet FR 2.564.037 du demandeur, ou encore être constituée de cailloux.

Pour faciliter la construction et le chargement, la couronne peut être agencée aussi pour servir de support à un certain nombres de paniers parallélépipédiques 10 séparés les uns des autres, comme représenté sur la Fig. 1.

Suivant un mode préféré de réalisation, des moyens de filtration particulaire peuvent être ajoutés à l'extérieur de la couronne, de manière à arrêter les poussières et particules susceptible à la longue de colmater la masse thermique M et le lit catalytique 9. Ces moyens de filtration peuvent être constitués par une couche filtrante 11 sous la forme par exemple d'un matelas préformé de 3 à 10 cm d'épaisseur, facilement amovible, de matériaux métalliques, céramiques ou composites, ou plus généralement d'un matériau tissé ou non tissé dont la densité est adaptée au pouvoir d'arrêt recherché. Cette couche de filtration, de par sa grande surface, participe à l'échange thermique.

Dans le plan diamétral de symétrie contenant l'axe 3 de la couronne, l'étroitesse de l'espace restant entre elle et la cage du fait de son excentrement et de l'avancée de paroi 4, crée un perte de charge suffisante pour empêcher les communications périphériques directes entre les deux espaces en amont et en aval Za et Zb autrement qu'au travers de la zone centrale Zc. Des joints ou bavettes 12 peuvent être éventuellement placés à la périphérie de la couronne où la température est relativement basse, pour parfaire l'étanchéité.

La couronne et la cage sont fermées à leur parties inférieures et supérieures par des plaques planes 13. Entre les plaques correspondantes de la couronne et de la cage, plusieurs balais (non représentés) en appui simultané, empêchent les flux parasites de contournement entre les zones Za et Zb.

Des moyens moteurs (non représentés) disposés au-dessus de la cage par exemple, sont couplés avec l'axe 3 de la couronne, pour l'entraîner en rotation par rapport à la cage.

Le secteur angulaire intermédiaire Zd délimité par la portion de paroi 4 de la cage, comporte de préférence une ouverture pour un conduit 14 d'injection d'air frais destinée à purger les effluents viciés au travers de la masse thermique la masse thermique et le catalyseur dans les quelques secteurs angulaires de la couronne passant devant elle, avant chaque inversion du sens du flux. L'air de purge après traversée des secteurs purgés, se retrouve dans la zone centrale où il est entraîné avec le flux principal vers la zone Zb au travers de la couronne 1.

Dans le secteur Ze opposé au secteur Zd, la cage comporte un autre conduit 15 pour une injection d'air frais destiné à réguler si besoin est, la température de la réaction catalytique si elle s'élève trop.

Le dispositif comporte également un moyen 16 d'injection d'un carburant tel que du GPL par exemple, ainsi qu'un moyen 17 d'injection d'un fluide de refroidissement tel que de l'eau pulvérisée par exemple pour compléter l'action de l'air injecté par le conduit 15.

### Fonctionnement

Une première étape consiste à porter le lit catalytique 9 à une température suffisante (200 à 300°C par exemple) pour que la réaction d'oxydation en présence de COV puisse s'amorcer. On branche les moyens de connexion reliés aux résistances électriques R de chauffage du lit catalytique, à une source d'énergie extérieure, telle que le réseau électrique. L'opération s'effectue de préférence en dehors des heures normales de fonctionnement du dispositif en profitant des plages horaires à tarification réduite (la nuit par exemple).

La température de réaction (de 300°C par exemple) ayant été atteinte, le dispositif est mis en marche avec mise en rotation de la couronne 1 et et établissement d'une circulation des effluents à l'intérieur de la cage 2. Les effluents traversent deux fois le lit catalytique 9, une première fois pour atteindre la zone centrale de la couronne 1 venant de la zone d'introduction Za, une deuxième fois pour atteindre la zone Zb d'évacuation. La réaction d'oxydation se déclenche spontanément en présence des particules de COV dans les effluents. Elle est exothermique et réglée de façon à dégager suffisamment d'énergie pour compenser sensiblement la dissipation calorifique. Selon l'efficacité thermique de la charge thermique M et la température opératoire, une proportion de 0,3 à 1g de COV par m3 d'effluents suffit généralement pour un fonctionnement autothermique.

Par le conduit 15, on peut injecter de l'air frais de façon à réguler dans un premier temps la température de la réaction catalytique si elle s'élève trop Si cette injection s'avère insuffisante pour assurer la régulation thermique requise, on déclenche l'injection par le conduit 17, d'un liquide pulvérisé tel que de l'eau qui se mêle aux effluents à traiter.

Les moyens 16, 17 d'injection de carburant et de fluide de refroidissement dans la conduite d'amenée 6, permettent de compenser les variations de température liées aux variations de la teneur en composés polluants (COV) des effluents. Si la teneur vient à diminuer, on commande une injection de carburant de façon à relever la température régnant dans la partie centrale de la cage 2. Si au la température de la zone réactive vient à s'élever, sous l'effet d'une augmentation de la teneur en COV, on commande une injection de fluide de refroidissement, (de l'eau pulvérisée par exemple) de façon à la ramener dans une plage de normale de fonctionnement.

Après leur double passage au travers du lit catalytique, de part et d'autre de la zone centrale Zc, les COV se trouvent transformés par la réaction en produits de combustion divers : CO2, H2O, N2 principalement, SOx et NOx à l'état de traces.

Les gaz à température élevée issus de la zone réactive traversent la partie de la charge M située dans la zone angulaire B de la couronne et lui cèdent une bonne partie de leurs calories. La rotation de la couronne 1 relativement à la cage 2, amène progressivement les éléments chauffés vers la zone angulaire A où ils peuvent céder à leur tour aux gaz entrant par le conduit d'amenée 6, une partie de l'énergie calorifique accumulée.

L'agencement du mode de réalisation qui vient d'être décrit, avec sa couronne tournante 1 à lit catalytique 9, ses moyens de chauffage R intégrés au lit catalytique 9 et ses moyens de régulation thermique par injection de fluides, permet de diminuer considérablement le coût de fabrication et de fonctionnement du dispositif. par rapport aux modes de réalisation antérieurs. Les moyens de chauffage R du lit catalytique étant débranchés avant la mise en route du dispositif, on évite ainsi les connecteurs tournants nécessaires autrement pour leur alimentation. Les moyens de régulation de température (injecteurs 16 de carburant, injecteur d'eau par exemple 17) sont simplement connectés au conduit d'amenée 6.

Le réacteur catalytique est ici constitué d'un lit 9 placé dans la couronne tournante 1. On ne sortirait pas du cadre de l'invention toutefois en utilisant un réacteur catalytique disposé de façon générale dans la zone centrale Zc de la couronne, pourvu également de moyens de chauffage fonctionnant également durant des étapes de préchauffage préalables aux opérations d'épuration et débranchés avant la mise en fonction du dispositif.

## Revendications

1. Procédé d'épuration en continu par combustion catalytique, d'effluents gazeux chargés de substances polluantes telles que des composés organo-volatils (COV), dans un dispositif comportant une cage (2), une couronne (1) d'axe vertical disposée à l'intérieur de la cage et contenant au moins une charge thermique (M) de matériaux présentant une grande surface d'échange thermique, des moyens moteurs pour animer la couronne (1) d'un mouvement de rotation relativement à la cage (2), un réacteur à lit catalytique (9) disposé dans la partie centrale du dispositif pour purifier les effluents, au moins un conduit (6) pour l'introduction d'effluents dans la cage (2) et au moins un conduit (7) pour l'évacuation d'effluents hors de la cage, des moyens de chauffage électrique et des moyens d'injection contrôlée d'un combustible et/ou d'au moins un fluide ininflammable de refroidissement, susceptible(s) de réguler la température de combustion, **caractérisé en ce qu'**il comporte successivement :
- une phase préalable de chauffage du réacteur à lit catalytique (9) le temps nécessaire à porter le lit catalytique à une température suffisante propre à l'amorçage d'une réaction d'oxydation catalytique des substances polluantes, par connexion temporaire d'éléments de chauffage électrique noyés dans le lit catalytique (9) à un appareil d'alimentation électrique extérieur au dispositif alors que la couronne (1) est immobile relativement à la cage (2), et, après déconnexion des moyens de chauffage de l'appareil d'alimentation électrique extérieur; et
- une phase de fonctionnement avec une mise en rotation de la couronne relativement à la cage en activant les moyens moteurs et établissement d'une circulation permanente d'effluents à épurer au travers de la couronne, et une régulation thermique de la réaction autotherme en utilisant les dits moyens d'injection.

## Patentansprüche

1. Verfahren zur kontinuierlichen Reinigung von gasförmigen Abströmen durch katalytische Verbrennung, die mit verunreinigenden Substanzen wie Organo-Flüchtig-Verbindungen (COV) beladen sind, in einer Vorrichtung, die einen Käfig (2), einen Ringkörper (1) vertikaler Achse, der im Inneren des Käfigs angeordnet ist und wenigstens eine thermische Charge (M) aus Materialien enthält, die über eine große Wärmeaustauscherfläche verfügen, Antriebsmittel, um dem Ringkörper (1) eine Drehbewegung relativ zum Käfig (2) zu erteilen, einen Reaktor mit katalytischem Bett (9), der im zentralen Teil der Vorrichtung zum Reinigen der Abströme angeordnet ist, eine Leitung (6) zum Einführen von Abströmen in den Käfig (2) und wenigstens eine Leitung (7) umfasst, um Abströme aus dem Käfig abzuziehen sowie elektrische Heizmittel und Mittel zur kontrollierten Einführung eines Brennstoffs und/oder wenigstens eines nicht entflammbaren Kühlfluids, das oder die in der Lage ist bzw. sind, die Verbrennungstemperatur zu steuern, **dadurch gekennzeichnet, dass** es in Aufeinanderfolge umfasst:
a. eine vorgeschaltete Phase zur Erwärmung des Reaktors mit katalytischem Bett (9) über einen Zeitraum, der notwendig ist, um das katalytische Bett auf eine ausreichende Temperatur zu bringen, die zum Zünden einer katalytischen Oxidationsreaktion der verunreinigenden Substanzen geeignet ist , durch zeitweise Verbindung von Elementen der elektrischen Beheizung, die im katalytischen Bett (9) versenkt sind, mit einem elektrischen Speisegerät außerhalb der Vorrichtung, während der Ringkörper (1) relativ zum Käfig (2) unbeweglich ist und nach Trennung der Heizmittel vom äußeren elektrischen Speisegerät; und
b. eine Betriebsphase, bei der der Ringkörper relativ zum Käfig in Drehung versetzt wird, indem die Antriebsmittel aktiviert werden und eine permanente Zirkulation von zu reinigenden Abströmen durch den Ringkörper und eine thermische Steuerung der autothermen Reaktion unter Verwendung dieser Injektionsmittel hergestellt wird.

## Claims

1. Process for continuous scrubbing by catalytic combustion of gaseous effluents charged with polluting substances such as organic volatile compounds (OVC), in a device including a case (2), a ring (1) with a vertical axis arranged inside the case and containing at least one thermal charge (M) of material with a large heat-exchange surface, drive means to impart a rotary motion to the ring (1) relative to the case (2), a catalytic bed reactor (9) arranged in the central part of the device for scrubbing the effluents, at least one conduit (6) for introduction of effluents into the case (2) and at least one conduit (7) for evacuation of effluents from the case, electrical heating means and means for controlled injection of a fuel and/or of at least one non-flammable cooling fluid, able to adjust the combustion temperature, ***characterised by** the fact* that it includes in succession:
- a preliminary phase of heating of the catalytic bed reactor (9) for the time necessary to bring the catalytic bed to a sufficient temperature suitable for initiating a reaction of catalytic oxidation of the polluting substances, by temporary connection of electrical heating elements embedded in the catalytic bed (9) to an electrical supply apparatus external to the device while the ring (1) is immobile relative to the case (2), and, after disconnection of the heating means from the external electrical supply; and
- a phase of operation with rotation of the ring relative to the case by activation of the drive means and establishment of a continuous circulation of effluents to be scrubbed through the ring, and thermal regulation of the self-heating reaction using the said injection means.
